# EUROPEAN PATENT SPECIFICATION

(11) **EP 4 214 370 B1**
(45) Date of publication and mention of the grant of the patent: **04.11.2026**
(21) Application number: 21794905.6
(22) Date of filing: 16.09.2021
(51) Int. Cl.: E03C 1/18, C08L 61/28, C08L 67/06, E03C 1/182, C08K 3/08, C08L 1/02

(54) **A SINK**
SPÜLE
ÉVIER

(30) Priority: 16.09.2020 GB 202014583; 08.01.2021 GB 202100243
(43) Date of publication of application: 26.07.2023
(73) Proprietor: Ellsi Limited, Scunthorpe, Lincolnshire DN15 8SL (GB)
(72) Inventor: DELANEY, Paul, Scunthorpe Lincolnshire DN15 8SL (GB)
(74) Representative: Aldridge, Christopher Simon
(86) International application number: PCT/GB2021/052401
(87) International publication number: WO 2022/058732

(56) References cited:
- WO-A1-95/19249
- CN-A- 109 280 330
- DE-T2- 69 631 856
- JP-A- H07 300 550
- KR-B1- 100 983 399
- US-A- 4 085 246
- US-A1- 2005 055 931
- US-A1- 2006 182 975

## Description

### Field of the Invention

The invention relates to a sink for use in a kitchen or utility area.

### Background to the Invention

Sinks and sink units are installed in most buildings and these need to have certain properties in order to work effectively. For example, because users are prone to throwing hot pans into sinks, kitchen sinks need to be heat resistant and impact resistant. As a result, granite sinks are particularly useful because they are extremely durable and are heat and scratch resistant; however, they are particularly heavy and costly to manufacture. Additionally, ceramic sinks are resistant to heat and impact, but, as with granite sinks, they are heavy and expensive. The weight of granite and ceramic sinks increases the transport costs and carbon footprint of the sink, which is bad for the environment. It is also worth noting that both granite and ceramic sinks are also prone to chipping because they are very hard materials.

Whilst a suitable material for a sink might include metal, particularly stainless steel, there is a certain aesthetic quality to granite and ceramic that is especially appealing to a buyer and/or user.

US2006/182975 (Burbank) discloses a thermoset polymer substrate having applied thereto an ionizable compound and an electrostatic powder coating. An abundance of different materials is disclosed that might be used in the substrate.

DE69631856 (Atofina) discloses a pigmentable low-profile thermosetting moulding material for production of moulded articles that have practically zero mould shrinkage or expansion. Various resins, fillers and other materials are disclosed.

JPH07300550 (Nippon) discloses a material comprising a melamine/formaldehyde resin that may be a polycondensate with another monomer or it may be a blend with another resin, and a pulp produced from wood.

CN109280330 (Fujian Yixintai) discloses a high-toughness melamine powder that includes melamine, formaldehyde water solution, nitric acid, polyethylene glycol, polyvinyl alcohol, hexafluorobutanol, triethylamine, caprolactam, wood pulp, fibres, inorganic filler and a release agent.

US4085246 (Busner) discloses a granite-like product that comprises acrylic polymer and microscopic filler.

US2005/055931 (Rochette) discloses a laminate which has a stone-like appearance and comprises a fibre cement board with a polymer resin laminated thereto.

WO95/19249 (Tastall) discloses a process for preparing a synthetic composite object comprises mixing a curable polymer with a filler to form a mixture, and, optionally, further adding a hardener and pigments to the mixture.

KR100983399 (Kwang Dong) discloses a sink for a laboratory that includes an inner layer formed on a surface layer, an inner reinforcing layer formed inside an inner layer, and a lower reinforcing layer. Various materials are disclosed for manufacturing the laboratory sink.

### Summary of the Invention

Accordingly, the present invention is directed to a kitchen sink constructed from a composite material comprising a combination of:
resin;
paper pulp;
titanium powder;
talcum powder; and
mould release agent and curing agent.

Thus, the sink of the present invention is constructed from a composite material that has the required temperature resistance and is considerably lighter in weight than granite or ceramic. The, the composite sink has a high degree of impact resistance without having too greater a hardness that it damages pans if they are forcefully placed into the sink. Furthermore, heat resistance is provided from harnessing the insulative of paper pulp and resin. Additionally, over ceramic and granite, the sink of the present invention is able to be shaped with sharper, or cleaner, edges and is able to be made into slimmer designs, thereby providing more design freedom and allowing for aesthetically attractive kitchen sinks at a lower cost. Importantly, because the sink is lighter and less prone to mechanical damage, it has a reduced carbon footprint, compared with comparable granite or ceramic sinks. Clearly, the resin binds the dry materials to form a robust composite sink.

Preferably, the paper pulp is alpha cellulose paper pulp. Alpha cellulose contains the highest degree of polymerization and so is the most stable, which provides the sink with strength and rigidity. The resulting sink has the required degree of toughness to withstand impact and scratching. In addition to the toughness provided by the paper pulp, due to the high proportion of natural materials present in the sink, the resulting product is biodegradable. A further benefit of the present invention is that the use of paper pulp may allow the sink to be made from recycled materials. Whilst a paper pulp containing a lower degree of polymerization may be employed, the alpha cellulose is preferred.

The provision of titanium powder, particularly titanium dioxide, in the composition increases the resistance to ultraviolet radiation and, additionally, can act as a whitening agent to create a more aesthetically attractive unit.

The addition of talcum powder reduces the risk of fouling during production of the sink.

The mould release agent and curing agent are present in the composition to assist with the shaping of the sink product and the removal of the sink, once formed.

It is advantageous that the sink comprises the materials in the following ranges:
resin - 50% to 62%;
paper pulp - 36% to 44%;
titanium powder - 0.6% to 1.7%;
talcum powder - 1.3% to 2.7% ; and
mould release agent and curing agent - 0.6% to 1.4%.

It is particularly advantageous that the materials are present in the composite sink in the following ranges:
resin - 54% to 58%;
paper pulp - 38% to 42%;
titanium powder - 0.8% to 1.5%;
talcum powder - 1.5% to 2.5% ; and
mould release agent and curing agent - 0.8% to 1.2%.

It is advantageous that the resin is a thermosetting plastics material, and it is particularly advantageous that the resin comprises melamine formaldehyde resin.

The overall product is able to be provided with a gloss finish or a matt finish, depending upon what is required and/or desirable.

A varnish coating and/or lamina coating may be applied to sink product to improve its aesthetic appearance.

In an alternative construction, it is envisaged that a sink is constructed from a composite material comprising a combination of:
resin;
silica dioxide (quartz sand);
fibreglass;
polystyrene; and
tert-Butyl peroxybenzoate.

Thus, the sink of the present invention is constructed from a composite material that has the required temperature resistance and is lighter in weight than granite or ceramic. Preferably, the sink has a coating of varnish to assist with resistance to impact and heat. Heat resistance can also be obtained from the insulative properties of the quartz sand. Therefore, the composite sink has a high degree of impact and heat resistance without having too greater a hardness that it damages pans. Additionally, the sink of the present invention is able to be shaped with sharper, or cleaner, edges and is above to be made into slimmer designs, thereby providing more design freedom and allowing for aesthetically attractive kitchen sinks at a lower cost. Importantly, because the sink is lighter and less prone to mechanical damage, it has a reduced carbon footprint. Clearly, the resin binds the dry materials to form a robust composite sink.

It is advantageous that the sink comprises the materials in the following ranges:
resin - 15% to 23%;
silica dioxide - 48% to 58%;
fibre glass - 12% to 20%;
polystyrene - 7% to 15% ; and
tert-Butyl peroxybenzoate - 0.4% to 0.8%.

It is particularly advantageous that the materials are present in the composite sink in the following ranges:
resin - 17% to 21%;
silica dioxide - 50% to 56%;
fibre glass - 14% to 18%;
polystyrene - 9% to 13% ; and
tert-Butyl peroxybenzoate - 0.5% to 0.7%.

In a preferred arrangement, the sink comprises the following percentages, by weight or volume:
resin - 19%;
silica dioxide - 53.24%
fibre glass - 16%;
polystyrene - 11.18%; and
tert-Butyl peroxybenzoate - 0.58%.

**In** one arrangement, the sink comprises further comprises a second basin section and/or an integral draining section. Having the parts integrally formed reduces the risk of leaks occurring where the two respective parts join and reduces the time required to install the sink unit; however, it is envisaged that the two parts may be provided separately, possibly with a coupling mechanism to allow the parts to be readily connected. The latter arrangement may allow the parts to be more readily transported. Thus, the sink may comprise a plurality of basin sections and/or a drainer section integral therewith, thereby allowing the sink to be a single bowl with draining section or multiple full or half bowls with or without an integral drainer. Alternatively, the sink may be an undermount sink or a Belfast sink, both of which may be either single or plural bowls. With the present invention, it is relatively simple and low cost to mould any style of sink.

It is preferable that the resin is unsaturated polyester resin. This is a relatively low cost resin that is particularly useful for binding the composite materials together, particular as the resin is resistant to water and to chemicals.

Advantageously, the varnish that is applied to the sink comprises alkyd resin. Thus, the sink is coated with the varnish to provide a protective coating that increases the sink's resistance to mechanical and thermal damage. Additionally, the resin varnish offers further resistance to moisture and ultra-violet light. It will be appreciated that other coatings may be applied, which may increase the impact resistance and/or heat resistance.

**In** a third arrangement, the sink may have a composition comprising: resin and a mix of at least two of: paper pulp; silica dioxide (quartz sand); and fibreglass. The resin may be any of those described herein and that binds the materials together to provide the required degree of heat insulation and toughness to the sink.

Additionally, the composition may further comprise one or more of: titanium powder; talcum powder; and mould release agent and curing agent; polystyrene; and tert-Butyl peroxybenzoate. As described herein, these materials provide further benefits to the sink of the present invention, such as increasing the toughness and anti-fouling properties to the composition.

The sink compositions described herein, provide microbial resistance, including, antibacterial properties, particularly in respect of Escherichia coli and Salmonella enterica subsp. Enterica.

In some arrangements, the sink may comprise further materials, such as a bulking agent. The bulking agent may be in the form of plant-based materials, such as bamboo fibre. Such fibres assist with increasing the strength of the resultant product. It is preferred that the bulking agent is biodegradable, which may be derived from wood.

Also disclosed herein is a method of manufacturing a sink as described herein.

### Brief description of the Figure

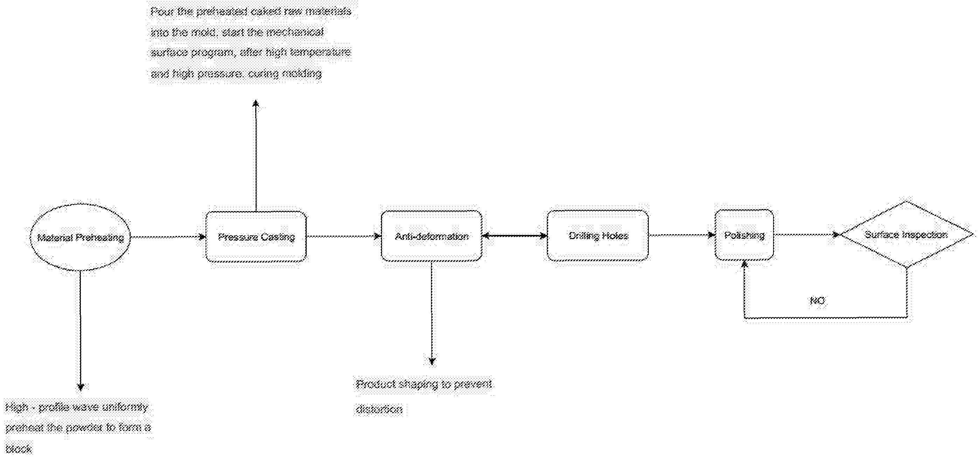

An example process for the manufacture of a sink in accordance with the present invention is shown in Figure 1.

### Description of Exemplary Embodiment

As shown in Figure 1, the sink of the present invention may be manufactured using known moulding process, for example, compression moulding or resin infusion moulding, although the former is preferred.

Thus, the materials are mixed in the appropriate ranges and heated and then the materials mix is compression moulded in a cavity mould, with the use of heat to cure the resin. It is preferable that the dry materials are in powder form and are mixed with one another prior to the addition of the resin, to ensure a good distribution of the component materials.

Once the moulding process is complete, the composite structure is removed from the mould and appropriate holes are drilled therein. These may include plug and drain holes, faucet holes and any other holes or recesses that are required in the finished product.

The sink is then passed through an anti-deformation process to reduce the risk of any deformation due to mechanical or thermal factors. Subsequent to the anti-deformation process, the sink is polished and inspected to ensure that it meets with the quality required. At this stage, surface decoration, such as colourant, may be applied to the sink, after which a surface coating of the varnish may be applied and cured to ensure that the sink is provided with a further protective layer.

The sink is inspected again to ensure that the varnish and underlying layers are not impaired or damaged before the sink is sent for packing and transport.

**In** view of the composite material being consistently distributed, should the surface of the sink become scratched, the appearance may still be consistent, unlike in some arrangements where the sink comprises a coloured coating that, when scratched shows the core material thereunder.

Where the sink is press-moulded, or compression-moulded, the tooling may allow for either a matt or gloss finish according to what is required. **In** such an arrangement, an insert may be applied to the tooling to give the desired finish.

The percentage values listed herein are, preferably, percentage by weight.

## Claims

1. A kitchen sink constructed from a composite material comprising:
resin;
paper pulp;
titanium powder;
talcum powder; and
mould release agent and curing agent.

2. A kitchen sink according to claim 1, wherein the sink comprises the materials in the following ranges:
resin - 50% to 62%;
paper pulp - 36% to 44%;
titanium powder - 0.6% to 1.7%;
talcum powder - 1.3% to 2.7% ; and
mould release agent and curing agent - 0.6% to 1.4%.

3. A kitchen sink according to claim 1 or claim 2, wherein the sink comprises a bulking agent.

4. A kitchen sink according to claim 3, wherein the bulking agent is bamboo.

5. A kitchen sink according to any one of claims 1 to 3, wherein the sink comprises further comprises a second basin section and/or an integral draining section.

6. A kitchen sink according to any preceding claim, wherein the resin is melamine formaldehyde resin.

7. A kitchen sink according to any preceding claim, wherein a varnish coating is applied to the composite sink structure.

## Patentansprüche

1. Küchenspüle, die aus einem Verbundmaterial hergestellt ist, das Folgendes umfasst:
Harz;
Papiermasse;
Titanpulver;
Talkumpulver; und
Formtrennmittel und Härtemittel.

2. Küchenspüle nach Anspruch 1, wobei die Spüle die Materialien in den folgenden Bereichen umfasst:
Harz - 50 % bis 62 %;
Papiermasse - 36 % bis 44 %;
Titanpulver - 0,6 % bis 1,7 %;
Talkumpulver - 1,3 % bis 2,7 %; und
Formtrennmittel und Härtemittel - 0,6 % bis 1,4 %.

3. Küchenspüle nach Anspruch 1 oder Anspruch 2, wobei die Spüle ein Füllmittel umfasst.

4. Küchenspüle nach Anspruch 3, wobei das Füllmittel Bambus ist.

5. Küchenspüle nach einem der Ansprüche 1 bis 3, wobei die Spüle ferner umfassend einen zweiten Beckenabschnitt und/oder einen integrierten Abtropfabschnitt umfasst.

6. Küchenspüle nach einem vorhergehenden Anspruch, wobei das Harz Melaminformaldehydharz ist.

7. Küchenspüle nach einem vorhergehenden Anspruch, wobei auf die Verbundspülenstruktur ein Lackanstrich aufgetragen ist.

## Revendications

1. Évier de cuisine construit à partir d'un matériau composite comprenant :
une résine ;
une pâte à papier ;
une poudre de titane ;
une poudre de talc ; et
un agent de démoulage et un agent de durcissement.

2. Évier de cuisine selon la revendication 1, dans lequel l'évier comprend les matériaux dans les plages suivantes :
résine - 50 % à 62 % ;
pâte à papier - 36 % à 44 % ;
poudre de titane - 0,6 % à 1,7 % ;
poudre de talc - 1,3 % à 2,7 % ; et
agent de démoulage et agent de durcissement - 0,6 % à 1,4 %.

3. Évier de cuisine selon la revendication 1 ou la revendication 2, dans lequel l'évier comprend un agent de charge.

4. Évier de cuisine selon la revendication 3, dans lequel l'agent de charge est du bambou.

5. Évier de cuisine selon l'une quelconque des revendications 1 à 3, dans lequel l'évier comprend comprend en outre une seconde section de cuve et/ou une section d'égouttage intégrée.

6. Évier de cuisine selon une quelconque revendication précédente, dans lequel la résine est une résine mélamine-formaldéhyde.

7. Évier de cuisine selon une quelconque revendication précédente, dans lequel un revêtement de vernis est appliqué sur la structure d'évier composite.
